(19) Europäisches Patentamt
European Patent Office
Office européen des brevets

(11) **EP 2 512 248 B1**

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(51) Int Cl.:
**A01N 43/707** *(2006.01)*    **A01N 43/40** *(2006.01)*
**A01N 43/82** *(2006.01)*    **A01P 13/00** *(2006.01)*

(21) Anmeldenummer: **10795998.3**

(22) Anmeldetag: **13.12.2010**

(86) Internationale Anmeldenummer:
**PCT/EP2010/069450**

(87) Internationale Veröffentlichungsnummer:
**WO 2011/082958 (14.07.2011 Gazette 2011/28)**

(54) **HERBIZIDE MITTEL ENTHALTEND FLUFENACET**

HERBICIDAL AGENTS COMPRISING FLUFENACET

AGENTS HERBICIDES CONTENANT DU FLUFÉNACET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2009 DE 102009054845**

(43) Veröffentlichungstag der Anmeldung:
**24.10.2012 Patentblatt 2012/43**

(73) Patentinhaber: **Bayer Intellectual Property GmbH 40789 Monheim (DE)**

(72) Erfinder:
• **MENNE, Hubert**
  **55252 Mainz-Kastel (DE)**
• **CROSS, Susan**
  **3717 Flowerdale via Yea (AU)**
• **SCHREIBER, Dominique**
  **40237 Düsseldorf (DE)**
• **MARCELES PALMA, Victor Jose**
  **40213 Düsseldorf (DE)**

(56) Entgegenhaltungen:
WO-A2-2007/112834    WO-A2-2008/075065
DE-A1- 4 223 465    US-A1- 2004 171 488

• GREY, T. L., BRIDGES, D.C.: "Alternatives to Diclofop for the Control of Ryegrass in Winter Wheat", WEED TECHNOLOGY , Bd. 17, Nr. 2 5. März 2001 (2001-03-05), Seiten 219-223, XP002668529, DOI: 10.1614/0890-037X(2003)017[0219:ATDFTC]2.0 . CO;2 Gefunden im Internet: URL:http://www.bioone.org/doi/full/10.1614 /0890-037X%282003%29017%5B0219%3AATDF TC%5D 2.0.CO%3B2 [gefunden am 2012-02-01]
• RITTER, R. L., HIWOT MENBERE: "Preemenrgence Control of Italian Ryegrass in Wheat", WEED TECHNOLOGY , Bd. 16, Nr. 1 12. März 2001 (2001-03-12), Seiten 55-59, XP002668530, DOI: 10.1614/0890-037X(2002)016[0055:PCOIRL]2.0 . CO;2 Gefunden im Internet: URL:http://www.bioone.org/doi/abs/10.1614/ 0890-037X%282002%29016%5B0055%3APCOIR L%5D2 .0.CO%3B2 [gefunden am 2012-02-01]
• YENISH, J.,P., EATON, N.A.: "Weed Control in Dry Pea Under Conventional No-Tillage Systems", WEED TECHNOLOGY , Bd. 16, Nr. 1 28. Dezember 2000 (2000-12-28), Seiten 88-95, XP002668531, DOI: 10.1614/0890-037X(2002)016[0088:WCIDPP]2.0 . CO;2 Gefunden im Internet: URL:http://www.bioone.org/doi/abs/10.1614/ 0890-037X%282002%29016%5B0088%3AWCIDP P%5D2 .0.CO%3B2 [gefunden am 2012-02-01]

EP 2 512 248 B1

- W. JAMES GRICHAR, BRENT A. BESLER, KEVIN D. BREWER, AND DREW T. PALRANG: "Flufenacet and Metribuzin Combinations for Weed Control and Corn (Zea mays) Tolerance", WEED TECHNOLOGY , Bd. 17, Nr. 2 10. Juli 2002 (2002-07-10), Seiten 346-351, XP002668532, DOI: 10.1614/0890-037X(2003)017[0346:FAMCFW]2.0 .CO;2 Gefunden im Internet: URL:http://www.bioone.org/doi/abs/10.1614/ 0890-037X%282003%29017%5B0346%3AFAMCF W%5D2 .0.CO%3B2 [gefunden am 2012-02-01]

- DATABASE WPI Week 201052 Thomson Scientific, London, GB; AN 2010-J62154 XP002668572, -& JP 2010 163411 A (BAYER CROPSCIENCE AG) 29. Juli 2010 (2010-07-29)

**Beschreibung**

Die Erfindung liegt auf dem technischen Gebiet der Pflanzenschutzmittel, die gegen Schadpflanzen z.B. in Pflanzenkulturen eingesetzt werden können und als Wirkstoffe in den herbiziden Mitteln eine Kombination von Flufenacet und mehreren weiteren Herbiziden enthalten.

Der herbizide Wirkstoff Flufenacet (Hersteller: Bayer CropScience) zeichnet sich durch eine breite Wirksamkeit gegen mono- und dikotyle Schadpflanzen aus und wird zum Beispiel (z.B.) im Vorsaatverfahren, im Vorauflauf oder im Nachauflauf in gesäten und/oder gepflanzten landwirtschaftlichen oder gärtnerischen Kulturpflanzen sowie auf Nicht-Kulturflächen eingesetzt (z.B. in Getreide wie beispielsweise Weizen, Gerste, Roggen, Hafer, Triticale, Reis, Mais, Hirse, Zuckerrübe, Zuckerrohr, Raps, Baumwolle, Sonnenblumen, Soja, Kartoffel, Tomaten, Bohnen, Flachs, Weidegras, Obstanbauanlagen, Plantagenkulturen, Grün- und Rasenflächen sowie Plätzen von Wohn- und Industrieanlagen, Gleisanlagen).

Als Einzelwirkstoff ist Flufenacet beispielsweise unter den Handelsnamen Cadou®, Drago®, Define® und Tiara® im Handel. Neben der Verwendung des Einzelwirkstoffs sind auch Mischungen von Flufenacet mit anderen Herbiziden literaturbekannt (z.B. US 5985797 B, US 5593942 B, US 5912206 B, US 5811373 B, US 5858920 B; US 6967188 B, US 6492301 B, US 6864217 B, US 6486096 B; US 2003/0069138 A, WO 2002/058472 A, US 6365550 B, US 2003/0060367 A, US 6878675 B, US 6071858 B, WO 2007/112834 A) und im Handel: Mischung mit Metribuzin (z.B. Axiom®, Bastille®, Artist®, Domain®, Plateen®, Fedor®, Draeda®), mit Isoxaflutole (z.B. Epic®, Cadou Star®), mit Metosulam (z.B. Diplöme®, Terano®), mit Diflufenican (z.B. Herold®, Liberator®), mit 2,4-D (z.B. Drago 3.4®), mit Atrazin (z.B. Aspect®), mit Pendimethalin (z.B. Crystal®, Malibu Pack®), mit Atrazin und Metribuzin (z.B. Axiom AT®) und mit Diflufenican und Flurtamone (z.B. Baccara FORTE®).Daneben werden in bzw. von DE 4223465 A1, Grey, T L & Bridges, D C ("Alternatives to Diclofop for the Control of Ryegrass in Winter Wheat", WEED TECHNOLOGY, Bd. 17, Nr. 2, 5. März 2001, S. 219-223), Ritter, R L & Hiwot Menbere ("Preemergence Control of Italian Ryegrass in Wheat", WEED TECHNOLOGY, Bd. 16, Nr. 1, 12. März 2001, S. 55-59) und Yenish, J P & Eaton, N A ("Weed Control in Dry Pea Under Conventional No-Tillage Systems", WEED TECHNOLOGY, Bd. 16, Nr. 1, 28. Dezember 2000, S. 88-95) herbizide Mittel beschrieben, welche Flufenacet und Metribuzin enthalten. W James Grichar et al. ("Flufenacet and Metribuzin Combinations for Weed Control and Corn (Zea mays) Tolerance", WEED TECHNOLOGY, Bd. 17, Nr. 2, 10. Juli 2002, S. 346-351) beschreibt Mittel, die Flufenacet und Metribuzin in Zusammensetzung mit Atrazin enthalten, mit dem Ziel die Wirksamkeit der Flufenacet-Metribuzin-Mischung zu verbessern. In WO 2008/075065 A2 wird eine Zusammensetzung beschrieben enthaltend Ethofumesat und eventuelle weitere Herbizide, wie beispielsweise die Zusammensetzung mit Flufenacet und Diflufenican. WO 2007/112834 A2 offenbart eine Zusammensetzung in Form wässriger Dispersionen enthaltend Diflufenican, Flufenacet und Flurtamone, wobei die Aufgabe der Erfindung in der Verbesserung der Aktivität der binären Mischung von Diflufenican und Flurtamone besteht. In US 2004/171488 A1 wird die Zusammensetzungen von N-Aryl-uracile-Herbiziden unter anderem mit weiteren Herbizidzusammensetzungen, wie Flufenacet mit Diflufenican oder Flufenacet mit Metribuzid zur selektiven Unkrautbekämpfung beschrieben, wobei besondere Kombinationen synergistische Wirkung zeigen.

Trotz der guten Wirkung von Flufenacet als Einzelwirkstoff und in den bereits bekannten Mischungen besteht immer noch Notwendigkeit zur Verbesserung des Anwendungsprofils dieses Wirkstoffs in speziellen Einsatzbereichen. Die Gründe hierfür sind vielfältig, wie z.B. weitere Erhöhung der Wirksamkeit in speziellen Anwendungsbereichen, Steigerung der Kulturpflanzenverträglichkeit, Reaktion auf neue Produktionstechniken in einzelnen Kulturen und/oder auf das zunehmende Auftreten von herbizd-resistenten Schadpflanzen (z.B. TSR und EMR Resistenzen bei ALS und ACCase), z.B. in Getreide, Reis und Mais. Diese Verbesserungen des Anwendungsprofils können sowohl einzeln wie aber auch in Kombination untereinander von Bedeutung sein.

Eine Möglichkeit zur Verbesserung des Anwendungsprofils eines Herbizids kann in der Kombination des Wirkstoffs mit einem oder mehreren geeigneten anderen Wirkstoffen bestehen. Allerdings treten bei der kombinierten Anwendung mehrerer Wirkstoffe nicht selten Phänomene der physikalischen und biologischen Unverträglichkeit auf, z.B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt. Erwünscht sind auch Kombinationen von Wirkstoffen, die die Kulturpflanzenverträglichkeit allgemein erhöhen und/oder bei speziellen Produktionstechniken eingesetzt werden können. Hierzu gehört beispielsweise eine Reduktion der Saattiefe, welche aus Kulturverträglichkeitsgründen häufig nicht verwendet werden kann. Dadurch erzielt man allgemein einen schnelleren Auflauf der Kultur, reduziert deren Risiko gegenüber Auflaufkrankheiten (wie z.B. Pythium und Rhizoctonia), verbessert die Überwinterungsfähigkeit und den Bestockungsgrad. Dies gilt auch für Spät-Saaten, die ansonsten nicht möglich wären aufgrund des Kulturverträglichkeitsrisikos.

Aufgabe der vorliegenden Erfindung bestand in der Verbesserung des Anwendungsprofils des herbiziden Wirkstoffs Flufenacet mit Hinblick auf:

- ein vereinfachteres Applikationsverfahren, welches die Kosten für den Anwender reduzieren und sich dadurch schonender auf die Umwelt auswirken würde.
- eine Verbesserung die Anwendungsflexibilität der Wirkstoffe vom Vorauflauf bis in den Nachauflauf der Kultur- und der Unkrautpflanzen.
- eine Verbesserung die Anwendungsflexibilität der Wirkstoffe, die eine Applikation vor der Aussaat der Kultur ermöglichen würde.
- eine Verbesserung und Anwendungsflexibilität der Wirkungssicherheit auf Böden mit unterschiedlichen Bodeneigenschaften.
- eine Verbesserung der Wirkungssicherheit auf resistente Unkrautpflanzenarten, welches eine neue Möglichkeit für ein effektives Resistenzmanagement ermöglichen würde.
- eine Verbesserung der Wirkungssicherheit auf Unkrautpflanzen die aus unterschiedlichen Bodentiefen keimen.
- eine Verbesserung und Anwendungsflexibilität auf Böden mit unterschiedlichen pH-Werten

Gelöst wurde diese Aufgabe durch Bereitstellung von herbiziden Mitteln enthaltend Flufenacet und die weiteren Herbiziden Diflufenican und Metribuzin.

Ein Gegenstand der Erfindung sind somit herbizide Mittel, enthaltend als einzige herbizid wirksame Bestandteile:

A) Flufenacet (Komponente A),
B) Diflufenican (Komponente B) und
C) Metribuzin (Komponente C); worin die Herbizid-Komponenten im nachstehend angegebenen Gewichtsverhältnis zueinander stehen: (Bereich Komponente A) : (Bereich Komponente B) : (Bereich Komponente C) (2-400) : (1:500) : (5:5000).

Die in dieser Beschreibung mit ihrem "common name" genannten Wirkstoffe (herbizid wirksamen Bestandteile) sind beispielsweise aus "The Pesticide Manual", 14. Auflage 2006/2007, oder in dem entsprechenden "The e-Pesticide Manual", Version 4.0 (2006-07), jeweils herausgegeben vom British Crop Protection Council and the Royal Soc. of Chemistry, und aus "The Compendium of Pesticide Common Names" im Internet (Webseite: http://www.alanwood.net/pesticides/) bekannt.

Die herbizid wirksamen Bestandteile Komponente A, B und C werden im Folgenden summarisch als "(Einzel-)Wirkstoffe", "(Einzel-)Herbizide" oder als "Herbizid-Komponenten" bezeichnet und sind als Einzelstoffe oder als Mischung z.B. bekannt aus "The Pesticide Manual", 14. Auflage (s.o.) und haben dort folgende Eintragungsnummern (Abkürzung: "PM #.." mit der jeweilig laufenden Eintragsnummer/"sequentiell entry number"):

- Komponente A: Flufenacet (PM #381), syn. thiafluamide, z.B. N-(4-fluorophenyl)-N-(1-methylethyl)-2-[[5-(trifluoromethyl)-1,3,4-thiadiazol-2-yl]oxy]acetamide;
- Komponente B: Diflufenican (PM #258), z.B. N-(2,4-difluorophenyl)-2-[3-(trifluoromethyl)phenoxy]-3-pyridinecarboxamide;
- Komponente C: Metribuzin (PM #573), z.B. 4-amino-6-(1,1-dimethylethyl)-3-(methylthio)-1,2,4-triazin-5(4$H$)-one.

Wenn im Rahmen dieser Beschreibung die Kurzform des "common name" eines Wirkstoffs verwendet wird, so sind damit - soweit anwendbar - jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfassten Verbindungen, häufig eine bevorzugte Verbindung.

Soweit in dieser Beschreibung die Abkürzung "AS/ha" verwendet wird, bedeutet dies "Aktivsubstanz pro Hektar", bezogen auf 100%igen Wirkstoff. Alle Prozentangaben in der Beschreibung sind Gewichtsprozente (Abkürzung: "Gew.-%") und beziehen sich, wenn nicht anders definiert, auf das relative Gewicht der jeweiligen Komponente bezogen auf das Gesamtgewicht des herbizide Mittels (z.B. als Formulierung).

Die erfindungsgemäßen herbiziden Mittel weisen einen herbizid wirksamen Gehalt an den Komponenten A, B und C auf und können weitere Bestandteile enthalten, z.B. agrochemische Wirkstoffe aus der Gruppe der Insektizide, Fungizide und Safener und/oder im Pflanzenschutz übliche Zusatzstoffe und/oder Formulierungshilfsmittel, oder zusammen mit diesen eingesetzt werden.

Die erfindungsgemäßen herbiziden Mittel weisen in bevorzugter Ausführungsform als Verbesserung des Anwendungsprofils synergistische Wirkungen auf. Diese synergistischen Effekte können z.B. bei gemeinsamer Ausbringung der Herbizid-Komponenten beobachtet werden, sie können jedoch häufig auch bei zeitlich versetzter Anwendung (Splitting) festgestellt werden. Möglich ist auch die Anwendung der einzelnen Herbizide oder der Herbizid-Kombinationen in mehreren Portionen (Sequenzanwendung), z.B. Anwendungen im Vorauflauf, gefolgt von Nachauflauf-Applikationen oder frühe Nachauflaufanwendungen, gefolgt von Applikationen im mittleren oder späten Nachauflauf. Bevorzugt ist dabei die gemeinsame oder die zeitnahe Anwendung der Wirkstoffe der erfindungsgemäßen herbiziden Mittel.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Die Aufwandmenge der Herbizid-Komponenten und deren Derivate im herbiziden Mittel kann in weiten Bereichen variieren. Bei Anwendungen mit Aufwandmengen von 16 bis 7500 g AS/ha der Herbizid-Komponenten wird im Vor- und Nachauflaufverfahren ein relativ breites Spektrum an annuellen und perennierenden Unkräutern, Ungräsern sowie Cyperaceen bekämpft.

Die Aufwandmengen der Herbizid-Komponenten stehen im herbiziden Mittel im nachstehend angegebenen Gewichtsverhältnis zueinander:

(Bereich Komponente A) : (Bereich Komponente B) : (Bereich Komponente C) im allgemeinen (2 - 400) : (1 - 500) : (5 - 5000),
vorzugsweise (1 - 40) : (1 - 30) : (2 - 50),
besonders bevorzugt (1 - 10) : (1 - 10) : (1 - 10).

Die Aufwandmengen der jeweiligen Herbizid-Komponenten im herbiziden Mittel sind:

- Komponente A: im allgemeinen 10 - 2000 g AS/ha, vorzugsweise 30 - 400 g AS/ha, besonders bevorzugt 50 - 300 g AS/ha Flufenacet;
- Komponente B: im allgemeinen 1 - 500 g AS/ha, vorzugsweise 10 - 300 g AS/ha, besonders bevorzugt 20 - 200 g AS/ha Diflufenican;
- Komponente C: im allgemeinen 5 - 5000 g AS/ha, vorzugsweise 20 - 500 g AS/ha, besonders bevorzugt 30 - 300 g AS/ha Metribuzin.

Entsprechend können aus den oben genannten Aufwandmengen die Gewichtsprozente (Gew.-%) der Herbizid-Komponenten bezogen auf das Gesamtgewicht der herbiziden Mittel berechnet werden, die zusätzlich auch noch weitere Bestandteile enthalten können.

Zur Anwendung der Wirkstoffe der erfindungsgemäßen herbiziden Mittel in Pflanzenkulturen kann es je nach Pflanzenkultur zweckmäßig sein, ab bestimmter Aufwandmengen einen Safener zu applizieren, um eventuelle Schäden an der Kulturpflanze zu reduzieren oder zu vermeiden. Solche Safener sind dem Fachmann bekannt. Geeignete Safener sind (S1-1) Mefenpyr(-diethyl), (S1-7) Fenchlorazole(-ethyl), (S1-12) Isoxadifen(-ethyl), (S2-1) Cloquintocet(-mexyl), (S3-1) Dichlormid, (S3-2) R-29148 (3-Dichloracetyl-2,2,5-trimethyl-1,3-oxazolidin), (S3-3) R-28725 (3-Dichloracetyl-2,2,-dimethyl-1,3-oxazolidin), (S3-4) Benoxacor, (S3-5) PPG-1292 (N-Allyl-N-[(1,3-dioxolan-2-yl)-methyl]-dichloracetamid), (S3-6) DKA-24 (N-Allyl-N-[(allylaminocarbonyl)-methyl]-dichloracetamid), (S3-7) AD-67/MON 4660 (3-Dichloracetyl-1-oxa-3-aza-spiro[4,5]decan), (S3-8) TI-35 (1-Dichloracetyl-azepan), (S3-9) Dicyclonon, (S3-10)/(S3-11) Furilazole, (S4-1) Cyprosulfamide, (S7-1) Methyl-(diphenylmethoxy)acetat (CAS-Regno: 41858-19-9), (S9-1) 1,2-Dihydro-4-hydroxy-1-methyl-3-(5-tetrazolyl-carbonyl)-2-chinolon (CAS-Regno: 95855-00-8), (S11-1) Oxabetrinil, (S11-2) Fluxofenim, (S11-3) Cyometrinil, (S12-1) Methyl-[(3-oxo-1H-2-benzothiopyran-4(3H)-yliden)methoxy]acetate (CAS-Regno: 205121-04-6), (S13-1) Naphthalic anhydride, (S13-2) Fenclorim, (S13-3) Flurazole, (S13-4) CL-304415 (4-Carboxy-3,4-dihydro-2H-1-benzopyran-4-essigsäure), (S13-5) MG-191 (2-Dichlormethyl-2-methyl-1,3-dioxolan), (S13-6) MG-838 (2-propenyl 1-oxa-4-azaspiro[4.5]decane-4-carbodithioate), (S13-7) Disulfoton (O,O-Diethyl S-2-ethylthioethyl phosphordithioat), (S13-8) Dietholate, (S13-9) Mephenate; besonders bevorzugt (S1-1) Mefenpyr(-diethyl), (S1-7) Fenchlorazole(-ethyl), (S1-12) Isoxadifen(-ethyl), (S2-1) Cloquintocet (-mexyl), (S3-1) Dichlormid, (S3-4) Benoxacor, (S3-7) AD-67/MON 4660 (3-Dichloracetyl-1-oxa-3-aza-spiro[4,5]decan), (S3-8) TI-35 (1-Dichloracetyl-azepan), (S3-10)/(S3-11) Furilazole, (S4-1) Cyprosulfamide, (S11-1) Oxabetrinil, (S11-2) Fluxofenim, (S11-3) Cyometrinil, (S13-1) Naphthalic anhydride, (S13-2) Fenclorim, (S13-3) Flurazole; ganz besonders bevorzugt (S1-1) Mefenpyr(-diethyl), (S1-7) Fenchlorazole(-ethyl), (S1-12) Isoxadifen(-ethyl), (S2-1) Cloquintocet (-mexyl), (S3-1) Dichlormid, (S3-4) Benoxacor, (S3-7) AD-67/MON 4660 (3-Dichloracetyl-1-oxa-3-aza-spiro[4,5]decan), (S3-10)/(S3-11) Furilazole, (S4-1) Cyprosulfamide, (S11-2) Fluxofenim, (S13-2) Fenclorim, (S13-3) Flurazole, (S14-1) Daimuron (syn. SK 23, 1-(1-Methyl-1-phenylethyl)-3-p-tolyl-harnstoff).

Besonders bevorzugte Kombinationen von erfindungsgemäßen herbiziden Mitteln und Safenern sind solche, bei denen der Safener ausgewählt ist aus der Gruppe von Safenern bestehend aus den Verbindungen (S1-1) Mefenpyr(-diethyl), (S1-12) Isoxadifen(-ethyl), (S2-1) Cloquintocet (-mexyl), (S4-1) Cyprosulfamide, ganz besonders bevorzugt als Safener sind (S1-1) Mefenpyr(-diethyl), (S1-12) Isoxadifen(-ethyl), und (S4-1) Cyprosulfamide. Für die Anwendung in Reis besonders bevorzugt sind (S1-12) Isoxadifen(-ethyl), (S13-2) Fenclorim und (S14-1) Daimuron. Für die Anwendung in Getreide besonders bevorzugt sind (S1-1) Mefenpyr(-diethyl), (S2-1) Cloquintocet (-mexyl), (S4-1) Cyprosulfamide, in Mais insbesondere (S1-12) Isoxadifen(-ethyl), (S3-1) Dichlormid, (S3-4) Benoxacor und (S4-1) Cyprosulfamide. Für die Anwendung in Zuckerrohr bevorzugt ist (S1-12) Isoxadifen(-ethyl) und (S4-1) Cyprosulfamide.

Die benötigten Aufwandmengen der Safener können je nach Indikation und den verwendetem Mengen der erfindungsgemäßen herbiziden Mittel innerhalb weiter Grenzen schwanken und sind in der Regel im Bereich von 1 bis 5000 g, vorzugsweise 5 bis 2500 g, insbesondere 10 bis 1000 g Wirkstoff je Hektar.

Das Gewichtsverhältnis der erfindungsgemäßen herbiziden Mittel : Safener kann innerhalb weiter Grenzen variieren und liegt vorzugsweise im Bereich von 1 : 50000 bis 500 : 1, insbesondere 1 : 8000 bis 250 : 1, ganz besonders bevorzugt 1 : 2500 bis 50 : 1. Die jeweils optimalen Mengen der erfindungsgemäßen herbiziden Mittel und Safener sind sowohl vom Typ des verwendeten Safeners sowie von der Art und dem Entwicklungsstadium des zu behandelnden Pflanzenbestandes abhängig und lassen sich von Fall zu Fall durch einfache, routinemäßige Vorversuche ermitteln.

In Hinblick auf die Applikation können erfindungsgemäße herbizide Mittel und Safener beispielsweise als Co-Formulierung oder als Tankmischung gemeinsam ausgebracht werden, sie können jedoch aber auch zeitlich versetzt angewendet werden (Splitapplikation, Splitting). Möglich ist auch die Anwendung in mehreren Portionen (Sequenzanwendung), z.B. nach Anwendungen als Saatgutbehandlung oder Vorsaat(pflanz)-Behandlung oder im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe, getrennte Anwendung (Applikation) von erfindungsgemäßen herbiziden Mittel und Safener, besonders bevorzugt die gemeinsame Anwendung.

Erfindungsgemäß umfasst sind auch solche Herbizid-Kombinationen, die neben den Komponenten A, B und C noch ein oder mehrere weitere agrochemische Wirkstoffe aus der Gruppe der Insektizide und Fungizide enthalten. Für solche Kombinationen gelten die vorstehend erläuterten bevorzugten Bedingungen.

Die erfindungsgemäßen herbiziden Mittel weisen eine ausgezeichnete herbizide Wirksamkeit gegen ein breites Spektrum wirtschaftlich wichtiger mono- und dikotyler Schadpflanzen wie Unkräuter, Ungräser oder Cyperaceen auf, einschließlich Arten die resistent sind gegen herbizide Wirkstoffe, wie z.B. Glyphosate, Glufosinate, Atrazin, Photosynthese Inhibitoren, Imidazolinon-Herbizide, Sulfonylharnstoffe, (Hetero-)aryloxy-aryloxyalkylcarbonsäuren bzw. -phenoxyalkylcarbonsäuren (sog. 'Fops'), Cyclohexanedionoxime (sog. 'Dims') oder Auxininhibitoren. Auch schwer bekämpfbare perennierende Unkräuter, die aus Rhizomen, Wurzelstöcken oder anderen Dauerorganen austreiben, werden durch die Wirkstoffe gut erfasst. Dabei können die Substanzen z.B. im Vorsaat-, Vorauflauf- oder Nachauflaufverfahren ausgebracht werden, z.B. gemeinsam oder getrennt.

Im einzelnen seien beispielhaft einige Vertreter der mono- und dikotylen Unkrautflora genannt, die durch die erfindungsgemäßen herbiziden Mittel kontrolliert werden können, ohne dass durch die Nennung eine Beschränkung auf bestimmte Arten erfolgen soll.

Auf der Seite der monokotylen Unkrautarten werden z.B. Avena spp., Alopecurus spp., Apera spp., Brachiaria spp., Bromus spp., Digitaria spp., Lolium spp., Echinochloa spp., Leptochloa spp., Fimbristylis spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfasst.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. Eclipta spp., Sesbania spp., Aeschynomene spp. und Viola spp., Xanthium spp., auf der annuellen Seite sowie Convolvulus, Cirsium, Rumex und Artemisia bei den perennierenden Unkräutern.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von zwei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird. Die erfindungsgemäßen herbiziden Mittel können auch in Reis in das Wasser appliziert werden und werden dann über Boden, Sproß und Wurzel aufgenommen.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Mitteln ist in der Regel günstig. Als besonderer Vorteil fällt ins Gewicht, dass die in den erfindungsgemäßen Mitteln verwendeten und wirksamen Dosierungen der Komponenten A, B und C so gering eingestellt werden können, dass ihre Bodenwirkung optimal niedrig ist. Somit wird deren Einsatz nicht nur in empfindlichen Kulturen erst möglich, sondern Grundwasser-Kontaminationen werden auch praktisch vermieden. Durch die erfindungsgemäße Kombination von Wirkstoffen wird eine erhebliche Reduzierung der nötigen Aufwandmenge der Wirkstoffe ermöglicht.

Bei der gemeinsamen Anwendung der Komponenten A, B und C in den erfindungsgemäßen Mitteln treten in bevorzugter Ausführungsform als Verbesserung des Anwendungsprofils überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine höhere und/oder längere Wirkungsstärke (Dauerwirkung); die Bekämpfung eines breiteren Spektrums von Unkräutern, Ungräsern und Cyperaceen, zum Teil mit nur einer bzw. wenigen Applikationen; schnelleres Einsetzen der herbiziden Wirkung; Kontrolle bislang nicht erfasster Arten (Lücken); Kontrolle z.B. von Arten, die Toleranzen oder Resistenzen gegenüber einzelnen oder mehreren Herbiziden aufweisen; Ausdehnung des Anwendungszeitraums und/oder eine Reduzierung der Anzahl notwendiger Einzelanwendungen bzw. eine Reduzierung der Aufwandmenge insgesamt und - als Resultat für den Anwender - ökonomisch und ökologisch vorteilhaftere Unkrautbekämpfungssysteme.

Die genannten Eigenschaften und Vorteile sind in der praktischen Unkrautbekämpfung gefordert, um landwirtschaftliche/ forstwirtschaftliche/ gärtnerische Kulturen, Grünland/Weideflächen oder Kulturen zur Energiegewinnung (Biogas, Bio-Ethanol) von unerwünschten Konkurrenzpflanzen freizuhalten und damit die Erträge qualitativ und quantitativ zu sichern und/oder zu erhöhen. Der technische Standard wird durch diese neuen Kombinationen in den erfindungsgemäßen herbiziden Mittel hinsichtlich der beschriebenen Eigenschaften deutlich übertroffen.

Obgleich die erfindungsgemäßen herbiziden Mittel eine ausgezeichnete herbizide Aktivität gegenüber mono- und dikotylen Schadpflanzen aufweisen, werden die Kulturpflanzen nur unwesentlich oder gar nicht geschädigt.

Darüber hinaus können die erfindungsgemäßen Mittel teilweise wachstumsregulatorische Eigenschaften bei den Kulturpflanzen aufweisen. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da Ernteverluste beim Lagern hierdurch verringert oder völlig verhindert werden können.

Aufgrund ihres verbesserten Anwendungsprofils können die erfindungsgemäßen Mittel auch zur Bekämpfung von Schadpflanzen in bekannten Pflanzenkulturen oder noch zu entwickelnden toleranten oder gentechnisch veränderten Kultur- und Energiepflanzen eingesetzt werden. Die transgenen Pflanzen (GMOs) zeichnen sich in der Regel durch besondere vorteilhafte Eigenschaften aus, beispielsweise durch Resistenzen gegenüber bestimmten Pestiziden, vor allem bestimmten Herbiziden (wie z.B. Resistenzen gegenüber den Komponenten A, B und C in den erfindungsgemäßen Mitteln), beispielsweise durch Resistenzen gegenüber Schadinsekten, Pflanzenkrankheiten oder Erregern von Pflanzenkrankheiten wie bestimmten Mikroorganismen wie Pilzen, Bakterien oder Viren. Andere besondere Eigenschaften betreffen z.B. das Erntegut hinsichtlich Menge, Qualität, Lagerfähigkeit, sowie der Zusammensetzung von speziellen Inhaltsstoffen. So sind transgene Pflanzen mit erhöhtem Stärkegehalt oder veränderter Qualität der Stärke oder solche mit anderer Fettsäurezusammensetzung des Ernteguts bzw. erhöhtem Vitamingehalt oder energetischer Eigenschaften bekannt. Weitere besondere Eigenschaften können in einer Toleranz oder Resistenz gegen abiotische Stressoren z.B. Hitze, Kälte, Trockenheit, Salz und ultraviolette Strahlung liegen. Gleichermaßen können die erfindungsgemäßen Mittel aufgrund ihrer herbiziden und weiteren Eigenschaften auch zur Bekämpfung von Schadpflanzen in Kulturen von bekannten oder noch zu entwickelnden durch Mutantenselektion erhaltenen Pflanzen eingesetzt werden, sowie aus Kreuzungen von mutagenen und transgenen Pflanzen.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z.B. EP 0221044 A, EP 0131624 A). Beschrieben wurden beispielsweise in mehreren Fällen: gentechnische Veränderungen von Kulturpflanzen zwecks Modifikation der in den Pflanzen synthetisierten Stärke (z.B. WO 92/011376 A, WO 92/014827 A, WO 91/019806 A); transgene Kulturpflanzen, welche gegen bestimmte Herbizide vom Typ Glufosinate (vgl. z.B. EP 0242236 A, EP 0242246 A) oder Glyphosate (WO 92/000377 A) oder der Sulfonylharnstoffe (EP 0257993 A, US 5,013,659) oder gegen Kombinationen oder Mischungen dieser Herbizide durch "gene stacking" resistent sind, wie transgenen Kulturpflanzen z. B. Mais oder Soja mit dem Handelsnamen oder der Bezeichnung Optimum™ GAT™ (Glyphosate ALS Tolerant); transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP 0142924 A, EP 0193259 A); transgene Kulturpflanzen mit modifizierter Fettsäurezusammensetzung (WO 91/013972 A); gentechnisch veränderte Kulturpflanzen mit neuen Inhalts- oder Sekundärstoffen z.B. neuen Phytoalexinen, die eine erhöhte Krankheitsresistenz verursachen (EP 0309862 A, EP 0464461 A); gentechnisch veränderte Pflanzen mit reduzierter Photorespiration, die höhere Erträge und höhere Stresstoleranz aufweisen (EP 0305398 A); transgene Kulturpflanzen, die pharmazeutisch oder diagnostisch wichtige Proteine produzieren ("molecular pharming"); transgene Kulturpflanzen, die sich durch höhere Erträge oder bessere Qualität auszeichnen; transgene Kulturpflanzen die sich durch eine Kombinationen z.B. der o.g. neuen Eigenschaften auszeichnen ("gene stacking").

Zahlreiche molekularbiologische Techniken, mit denen neue transgene Pflanzen mit veränderten Eigenschaften hergestellt werden können, sind im Prinzip bekannt; siehe z.B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431). Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z.B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin auch ein Verfahren zur Bekämpfung von unerwünschtem Pflanzenwuchs (z.B. Schadpflanzen), vorzugsweise in Pflanzenkulturen wie Getreide (z.B. Hart- und Weichweizen, Gerste, Roggen, Hafer, Kreuzungen davon wie Triticale, gepflanztem oder gesäten Reis unter'Upland'- oder'Paddy'-Bedingungen, Mais, Hirsen wie beispielsweise Sorghum), Zuckerrübe, Zuckerrohr, Raps, Baumwolle, Sonnenblumen, Soja, Kartoffel, Tomaten, Bohnen wie beispielsweise Buschbohne und Pferdebohne, Flachs, Weidegras, Obstanbauanlagen, Plantagenkulturen, Grün- und Rasenflächen sowie Plätzen von Wohn- und Industrieanlagen, Gleisanlagen, besonders bevorzugt in monokotylen Kulturen wie Getreide, z.B. Weizen, Gerste, Roggen, Hafer, Kreuzungen davon wie Triticale, Reis, Mais und Hirse sowie dikotylen Kulturen wie Sonnenblumen, Soja, Kartoffel, Tomaten, wobei man die Komponenten A, B und C der erfindungsgemäßen herbiziden Mittel gemeinsam oder getrennt, z.B. im Vorauflauf (sehr früh bis spät), Nachauflauf oder im Vor- und Nachauflauf, auf die Pflanzen, z.B. Schadpflanzen, Pflanzenteile, Pflanzensamen oder die Fläche auf der die Pflanzen wachsen, z.B. die Anbaufläche appliziert.

Gegenstand der Erfindung ist auch das Verfahren mit den erfindungsgemäßen herbiziden Mittel enthaltend die Komponenten A, B und C zur selektiven Bekämpfung von Schadpflanzen in Pflanzenkulturen, vorzugsweise in den oben genannten Pflanzenkulturen, sowie dessen Verwendung.

Gegenstand der Erfindung ist auch das Verfahren zur Bekämpfung von unerwünschtem Pflanzenwuchs mit den erfindungsgemäßen herbiziden Mittel enthaltend die Komponenten A, B und C, sowie dessen Verwendung, in Pflanzenkulturen, die gentechnisch verändert (transgen) oder durch Mutationsselektion erhalten wurden, und welche gegen Wuchsstoffe, wie z.B. 2,4 D, Dicamba oder gegen Herbizide, die essentielle Pflanzenenzyme, z.B. Acetolactatsynthasen (ALS), EPSP Synthasen, Glutaminsynthasen (GS) oder Hydoxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, oder gegen beliebige Kombinationen dieser Wirkstoffe, resistent sind. Besonders bevorzugt können die erfindungsgemäßen herbiziden Mittel in transgenen Kulturpflanzen eingesetzt werden, die gegen eine Kombination von Glyphosaten und Glufosinaten, Glyphosaten und Sulfonylharnstoffen oder Imidazolinonen resistent sind. Ganz besonders bevorzugt können die erfindungsgemäßen herbiziden Mittel in transgenen Kulturpflanzen wie z. B. Mais oder Soja mit dem Handelsnamen oder der Bezeichnung Optimum™ GAT™ (Glyphosate ALS Tolerant) eingesetzt werden.

Gegenstand der Erfindung ist auch die Verwendung der erfindungsgemäßen herbiziden Mittel enthaltend die Komponenten A, B und C zur Bekämpfung von Schadpflanzen, vorzugsweise in Pflanzenkulturen, vorzugsweise in den oben genannten Pflanzenkulturen.

Die erfindungsgemäßen herbiziden Mittel können auch nicht-selektiv zur Bekämpfung unerwünschten Pflanzenwuchses eingesetzt werden, z.B. in Plantagenkulturen, an Wegrändern, Plätzen, Industrieanlagen oder Eisenbahnanlagen; oder selektiv zur Bekämpfung unerwünschten Pflanzenwuchses in Kulturen zur Energiegewinnung (Biogas, Bio-Ethanol) eingesetzt werden.

Die erfindungsgemäßen herbiziden Mittel können sowohl als Mischformulierungen der Komponenten A, B und C und gegebenenfalls mit weiteren agrochemischen Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden. Unter Umständen können die Mischformulierungen mit anderen Flüssigkeiten oder Feststoffen verdünnt oder auch unverdünnt angewendet werden.

Die Komponenten A, B und C oder deren Unterkombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), wasserlösliche Konzentrate, emulgierbare Konzentrate (EC), wässrige Lösungen (SL), Emulsionen (EW) wie Öl-in-Wasser- und Wasser-in-Öl-Emulsionen, versprühbare Lösungen oder Emulsionen, Suspensionskonzentrate (SC), Dispersionen, Öldispersionen (OD), Suspoemulsionen (SE), Stäubemittel (DP), Beizmittel, Granulate zur Boden- oder Streuapplikation (GR) oder wasserdispergierbare Granulate (WG), Ultra-Low-Volume-Formulierungen, Mikrokapsel- oder Wachsdispersionen.

Die einzelnen Formulierungstypen sind im Prinzip bekannt und werden beispielsweise beschrieben in: "Manual on Development and Use of FAO and WHO Specifications for Pesticides", FAO and WHO, Rome, Italy, 2002; Winnacker-Küchler, "Chemische Technologie", Band 7, C. Hanser Verlag München, 4. Aufl. 1986; van Valkenburg, "Pesticide Formulations", Marcel Dekker N.Y. 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hanser Verlag München, 4. Aufl. 1986.

Auf der Basis dieser Formulierungen lassen sich auch Kombinationen mit anderen agrochemischen Wirkstoffen, wie Fungizide, Insektizide, sowie Safener, Düngemittel und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben den Wirkstoffen außer einem oder mehreren Verdünnungs- oder Inertstoffen noch Tenside ionischer und/oder nichtionischer Art (Netzmittel, Dispergiermittel), z.B. polyoxethylierte Alkylphenole, polyethoxylierte Fettalkohole oder -Fettamine, Propylenoxid-Ethylenoxid-Copolymerisate, Alkansulfonate oder Alkylbenzolsulfonate oder Alkylnaphthalinsulfonaten, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen der Wirkstoffe in einem organischen Lösungsmittel oder Lösungsmittelgemisch, z.B. Butanol, Cyclohexanon, Dimethylformamid, Acetophenon, Xylol oder auch höhersiedenden Aromaten oder Kohlenwasserstoffe unter Zusatz von einem oder mehreren ionischen und/oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Copolymerisate, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate sind Wasser-basierte Suspensionen von Wirkstoffen. Sie können beispielsweise durch Nass-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden. Neben dem suspendierten Wirkstoff bzw. Wirkstoffen, können weitere Wirkstoffe in der Formulierung auch gelöst vorliegen.

Öldispersionen sind Öl-basierte Suspensionen von Wirkstoffen, wobei unter Öl jegliche organische Flüssigkeit zu verstehen ist, z. B. Pflanzenöle, aromatische oder aliphatische Lösemittel, oder Fettsäurealkylester. Sie können beispielsweise durch Nass-Vermahlung mittels handelsüblicher Perlmühlen und gegebenenfalls Zusatz von weiteren Tensiden (Netzmittel, Dispergiermittel), wie sie z.B. oben bei den anderen Formulierungstypen bereits aufgeführt sind, hergestellt werden. Neben dem suspendierten Wirkstoff bzw. Wirkstoffen, können weitere Wirkstoffe in der Formulierung auch gelöst vorliegen.

Emulsionen, z.B. Öl-in-Wasser-Emulsionen (EW), lassen sich beispielsweise mittels Rührern, Kolloidmühlen und/oder statischen Mischern aus Mischungen aus Wasser und mit Wasser nicht mischbaren organischen Lösungsmitteln und gegebenenfalls von weiteren Tensiden, wie sie z.B. oben bei den anderen Formulierungstypen bereits aufgeführt sind, herstellen. Die Wirkstoffe liegen hierbei in gelöster Form vor.

Granulate können entweder durch Verdüsen des Wirkstoffs auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite, Kreide oder von granuliertem Inertmaterial. Auch können geeignete Wirkstoffe in der für die Herstellung von Düngemittelgranulaten üblichen Weise-gewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt.

Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gewichtsprozent, insbesondere 2 bis 95 Gew.-%, Wirkstoffe der Herbizid-Komponenten, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstoffformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Die herbizide Wirkung der erfindungsgemäßen Herbizid-Kombinationen kann z.B. durch oberflächenaktive Substanzen verbessert werden, beispielsweise durch Netzmittel aus der Reihe der Fettalkohol-Polyglykolether. Die Fettalkohol-Polyglykolether enthalten vorzugsweise 10 - 18 C-Atome im Fettalkoholrest und 2 - 20 Ethylenoxideinheiten im Polyglykoletherteil. Die Fettalkohol-Polyglykolether können Natrium- und Kaliumsalze) oder Ammoniumsalze, oder auch als Erdalkalisalze wie Magnesiumsalze, wie $C_{12}/C_{14}$-Fettalkohol-diglykolethersulfat-Natrium (Genapol® LRO, Clariant GmbH); siehe z.B. EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Nichtionische Fettalkohol-Polyglykolether sind beispielsweise 2 - 20, vorzugsweise 3 - 15, Ethylenoxideinheiten enthaltende ($C_{10}$- $C_{18}$)-, vorzugsweise ($C_{10}$-$C_{14}$)-Fettalkohol-Polyglykolether (z.B. Isotridecylalkohol-Polyglykolether) z.B. aus der Genapol® X-Reihe wie Genapol® X-030, Genapol® X-060, Genapol® X-080 oder Genapol® X-150 (alle von Clariant GmbH).

Die vorliegende Erfindung umfasst ferner die Kombination der Komponenten A, B und C mit den vorgängig genannten Netzmitteln aus der Reihe der Fettalkohol-Polyglykolether, die vorzugsweise 10 - 18 C-Atome im Fettalkoholrest und 2 - 20 Ethylenoxideinheiten im Polyglykoletherteil enthalten und nichtionisch oder ionisch (z.B. als Fettalkohol-polyglykolethersulfate) vorliegen können. Bevorzugt sind $C_{12}/C_{14}$-Fettalkohol-diglykolethersulfat-Natrium (Genapol® LRO, Clariant GmbH) und Isotridecylalkohol-Polyglykolether, mit 3 - 15 Ethylenoxideneinheiten, z.B. aus der Genapol® X-Reihe wie Genapol® X-030, Genapol® X-060, Genapol® X-080 und Genapol® X-150 (alle von Clariant GmbH). Weiterhin ist bekannt, daß Fettalkohol-Polyglykolether wie nichtionische oder ionische Fettalkohol-polyglykolether (z.B. Fettalkohol-Polyglykolethersulfate) auch als Penetrationshilfsmittel und Wirkungsverstärker für eine Reihe anderer Herbizide, unter anderem auch für Herbizide aus der Reihe der Imidazolinone geeignet sind (siehe z.B. EP-A-0502014).

Die herbizide Wirkung der erfindungsgemäßen Herbizid-Kombinationen kann auch durch die Verwendung von Pflanzenölen verstärkt werden. Unter dem Begriff Pflanzenöle werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von $C_{10}$-$C_{22}$-, vorzugsweise $C_{12}$-$C_{20}$-Fettsäuren. Die $C_{10}$-$C_{22}$-Fettsäu-reester sind beispielsweise Ester ungesättigter oder gesättigter $C_{10}$-$C_{22}$-Fettsäuren, insbesondere mit gerader Kohlenstoffatomzahl, z.B. Erucasäure, Laurinsäure, Palmitinsäure und insbesondere $C_{18}$-Fettsäuren wie Stearinsäure, Ölsäure, Linolsäure oder Linolensäure.

Beispiele für $C_{10}$-$C_{22}$-Fettsäure-Ester sind Ester, die durch Umsetzung von Glycerin oder Glykol mit den $C_{10}$-$C_{22}$-Fettsäuren erhalten werden, wie sie z.B. in Ölen aus ölliefernden Pflanzenarten enthalten sind, oder

$C_1$-$C_{20}$-Alkyl-$C_{10}C_{22}$-Fettsäure-Ester, wie sie z.B. durch Umesterung der vorgenannten Glycerin- oder Glykol-$C_{10}$-$C_{22}$-Fettsäure-Ester mit $C_1$-$C_{20}$-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als $C_1$-$C_{20}$-Alkyl-$C_{10}$-$C_{22}$-Fettsäure-Ester bevorzugt sind Methylester, Ethylester, Propylester, Butylester, 2-ethyl-hexylester und Dodecylester. Als Glykol- und Glycerin-$C_{10}$-$C_{22}$-Fettsäure-Ester bevorzugt sind die einheitlichen oder gemischten Glykolester und Glycerinester von $C_{10}$-$C_{22}$-Fettsäuren, insbesondere solcher Fettsäuren mit gerader Anzahl an Kohlenstoffatomen, z.B. Erucasäure, Laurinsäure, Palmitinsäure und insbesondere $C_{18}$-Fettsäuren wie Stearinsäure, Ölsäure, Linolsäure oder Linolensäure.

Die Pflanzenöle können in den erfindungsgemäßen herbiziden Mitteln z.B. in Form kommerziell erhältlicher ölhaltiger Formulierungszusatzstoffe, insbesondere solcher auf Basis von Rapsöl wie Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Die vorliegende Erfindung umfasst in einer weiteren Ausführungsform Kombinationen der Komponenten A, B und C mit den vorgängig genannten Pflanzenölen wie Rapsöl, bevorzugt in Form kommerziell erhältlicher ölhaltiger Formulierungszusatzstoffe, insbesondere solcher auf Basis von Rapsöl wie Hasten®, Actirob®B, Rako-Binol®, Renol® oder Stefes Mero®.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Formulierungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen herbiziden Mittel mit den Komponenten A, B und C hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden.

A. Formulierungsbeispiele allgemeiner Art

a) Ein Stäubemittel wird erhalten, indem man 10 Gew.-Teile eines Wirkstoffs/Wirkstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirkstoffgemischs, 64 Gew.-Teile kaolinhaltigen Ton als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbaren Suspensionskonzentrat wird erhalten, indem man 20 Gew.-Teile eines Wirkstoffs/Wirkstoffgemischs mit 5 Gew.-Teilen Tristyrylphenolpolyglykolether (Soprophor BSU), 1 Gew.-Teil Ligninsulfonat-Natrium (Vanisperse CB) und 74 Gew.-Teilen Wasser mischt und in einer Reibkugelmühle auf eine Feinheit von unter 5 Mikron vermahlt.

d) Eine in Wasser leicht verteilbare Öldispersion wird erhalten, indem man 20 Gew.-Teile eines Wirkstoffs/Wirkstoffgemischs mit 6 Gew.-Teilen Alkylphenolpolyglykolether (Triton® X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.

e) Ein emulgierbares Konzentrat wird erhalten aus 15 Gew.-Teilen eines Wirkstoffs/Wirkstoffgemischs, 75 Gew.-Teilen Cyclohexanon als Lösemittel und 10 Gew.-Teilen oxethyliertem Nonylphenol als Emulgator.

f) Ein in Wasser dispergierbares Granulat wird erhalten indem man

75 Gew.-Teile eines Wirkstoffs/Wirkstoffgemischs,

10 Gew.-Teile ligninsulfonsaures Calcium,

5 Gew.-Teile Natriumlaurylsulfat,

3 Gew.-Teile Polyvinylalkohol und

7 Gew.-Teile Kaolin

mischt, auf einer Stiftmühle mahlt und das Pulver in einem Wirbelbett durch Aufsprühen von Wasser als Granulierflüssigkeit granuliert.

g) Ein in Wasser dispergierbares Granulat wird auch erhalten, indem man 25 Gew.-Teile eines Wirkstoffs/Wirkstoffgemischs,

5 Gew.-Teile 2,2'-dinaphthylmethan-6,6'-disulfonsaures Natrium,

2 Gew.-Teile oleoylmethyltaurinsaures Natrium,

1 Gew.-Teil Polyvinylalkohol,

17 Gew.-Teile Calciumcarbonat und

50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

a) Methodenbeschreibungen

Gewächshausversuche

In der Standardversuchdurchführung wurden die Samen unterschiedlicher Unkraut und Ungras Biotypen (Herkünfte) in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden auf einer Laborspritzbahn mit Spritzbrühen mit den erfindungsgemäßen Mitteln, Mischungen des Standes der Technik beziehungsweise mit den einzeln angewandten Komponenten behandelt. Die Applikation der als WG, WP, EC oder anders formulierten Wirkstoffe oder Wirkstoffkombinationen erfolgte zu den entsprechenden Wachstumsstadien der Pflanzen. Die Wasseraufwandmenge für die Spritzapplikation betrug 100-600 l/ha. Nach der Behandlung wurden die Pflanzen wieder in den Gewächshäusern aufgestellt.

Etwa 3 Wochen nach der Applikation wurde die Boden- oder/und Blattwirkung gemäß einer Skala von 0-100% optisch im Vergleich zu einer unbehandelten Vergleichsgruppe bewertet: 0% = keine erkennbare Wirkung im Vergleich zur unbehandelten Vergleichsgruppe; 100% = vollständige Wirkung im Vergleich zur unbehandelten Vergleichsgruppe.

(Anmerkungen: Der Begriff "Samen" umfasst auch vegetative Vermehrungsformen, wie z.B. Rhizomstücke; verwendete Abkürzungen: h Licht = Stunden Beleuchtungsdauer, g AS/ha = Gramm Aktivsubstanz je Hektar, l/ha = Liter je Hektar, S = sensitiv, R = resistent)

1. Unkrautwirkung im Vorauflauf: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.

2. Unkrautwirkung im Nachauflauf: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16h Licht, Temperatur Tag 20-22°C, Nacht 15-18°C) bis zum Applikationszeitpunkt kultiviert. Die Töpfe wurden zu unterschiedlichen BBCH Stadien zwischen 11-25 der Samen/Pflanzen, d.h. in der Regel zwischen zwei bis drei Wochen nach Beginn der Anzucht, auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.

3. Unkrautwirkung im Vorauflauf mit und ohne Wirkstoffeinarbeitung: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät. Die Töpfe mit den Samen wurden im Vergleich entweder im BBCH Stadium 00-10 der Samen/Pflanzen, d.h. in der Regel zwischen zwei bis drei Wochen nach Beginn der Anzucht, auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt, oder eine äquivalente Menge der erfindungsgemäßen Mitteln, Mischungen beziehungsweise der einzeln angewandten Komponenten als WG, WP, EC oder anderen Formulierungen wurden in die Deckschicht von 1 cm eingearbeitet. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

4. Selektivitätswirkung im Vorauflauf: Samen unterschiedlicher Kulturarten (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.

5. Selektivitätswirkung im Nachauflauf: Samen unterschiedlicher Kulturarten (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 11-32 der Samen/Pflanzen, d.h. in der Regel zwischen zwei bis vier Wochen nach Beginn der Anzucht, auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert

6. Unkrautwirkung in der Vorsaatanwendung: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät. Die Töpfe mit den Samen wurden vor der Aussaat, entsprechend 7 Tage, auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Aussaat wurden die Töpfe in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

7. Unkrautwirkung im Vor- und Nachauflauf bei unterschiedlichen Bodenbedingungen: Samen unterschiedlicher Unkraut und Ungras Biotypen (Herkünfte) wurden in einem mit natürlicher Erde gefüllten Topf von 8-13 cm Durchmesser ausgesät und mit einer Abdeckschicht des Bodens von etwa 1 cm abgedeckt. Für einen Vergleich der herbiziden Wirkung wurden die Pflanzen in unterschiedlichen Anzuchterden, von einem Standardfeldboden (lehmiger Schluff; nicht steril) mit geringer organischer Substanz (1,8%) bis schweren Boden und höherer organischen Substanzgehalt (6,8%) (Mischung aus Standardfeldboden und einer Einheitserde ED73 1:1), kultiviert. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

8. Unkrautwirkung im Vor- und Nachauflauf zur Bekämpfung resistenter Ungras- / Unkrautarten: Samen unterschiedlicher Unkraut und Ungras Biotypen (Herkünfte) mit unterschiedlichen Resistenzmechanismen gegenüber verschiedenen Wirkmechanismen wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt.. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

9. Unkrautwirkung und Kulturselektivität im Vor- und Nachauflauf bei unterschiedlichen Aussaatbedingungen: Samen unterschiedlicher Unkraut, Ungras Biotypen (Herkünfte) und Kulturarten (Herkünfte) wurden in einem mit natürlicher Erde gefüllten Topf von 8-13 cm Durchmesser ausgesät und mit einer Abdeckschicht des Bodens von etwa 0,5 und 2cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

10. Unkrautwirkung im Vor- und Nachauflauf bei unterschiedlichen pH-Werten des Bodens: Samen unterschiedlicher Unkraut und Ungras Biotypen (Herkünfte) wurden in einem mit natürlicher Erde gefüllten Topf von 8-13 cm Durchmesser ausgesät und mit einer Abdeckschicht des Bodens von etwa 1 cm abgedeckt. Für einen Vergleich der herbiziden Wirkung wurden die Pflanzen in Anzuchterden, von einem Standardfeldboden (lehmiger Schluff; nicht steril) mit unterschiedlichen pH-Werten von pH 7,4 und pH 8,4 kultiviert. Der Boden wurde entsprechend mit Kalk auf den höheren pH-Wert aufgemischt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

b) Ergebnisse

Folgende Abkürzungen wurden verwendet:

BBCH = BBCH-Code gibt Auskunft über das morphologische Entwicklungsstadium einer Pflanze. Die Abkürzung steht offiziell für die Biologische Bundesanstalt, Bundessortenamt und CHemische Industrie. Der Bereich von BBCH 00-10 steht für die Stadien der Keimung der Samen bis zum Durchstoßen der Oberfläche. Der Bereich von BBCH 11-25 steht für die Stadien der Blattentwicklung bis zur Bestockung (entsprechend Anzahl der Bestockungstriebe bzw. Seitensprosse)..

PE = Vorauflaufapplikation auf den Boden; BBCH der Samen/Pflanzen 00-10

PO = Nachauflaufapplikation auf die grünen Pflanzenteile; BBCH der Pflanzen 11-25

Einmischung = die entsprechende Menge an Spritzbrühe je Fläche wurde manuell in den Boden der Abdeckschicht eingemischt.

ED73-Boden = Einheitserde bestehend aus Untergrundton und hochwertigen Torfen

IU-Boden = lehmiger Schluff - Standardfeldboden

TSR = " engl. Target-Site Resistance" - Wirkort Resistenz - Die Unkrautpopulationen enthalten Biotypen mit einer Wirkortspezifischen Resistenz d.h. durch natürliche Mutationen in der Gensequenz verändert sich die Bindungsstelle am Wirkort, sodass die Wirkstoff nicht mehr oder unzureichend binden und entsprechend wirken können.

EMR = "engl. Enhanced Metabolic Resistance" - Metabolische Resistenz - Die Unkrautpopulationen enthalten Biotypen mit einer metabolischen Resistenz d.h. die Pflanzen besitzen die Fähigkeit über Enzymkomplexe die Wirkstoffe schneller zu metabolisieren, d.h. die Wirkstoffe werden in der Pflanze schneller abgebaut.

HRAC = "Herbicide Resistance Action Committee" Arbeitsgruppe der forschenden Industrien, welche die zugelassenen Wirkstoffe nach ihrem Wirkmechanismus (MoA = Mode of Action = Wirkmechanismus) einteilt (z.B HRAC Gruppe B = Acetolactatsynthase Inhibitoren (ALS)).

HRAC Gruppe A = Acetylcoenzym-A-Carboxylase Inhibitoren (ACCase)).

HRAC Gruppe B = Acetolactatsynthase Inhibitoren (ALS)).

HRAC Gruppe C1 = Photosynthese Inhibitoren - Metribuzin.

HRAC Gruppe F1 = Inhibitoren der Pytoendesaturase (PDS) - Diflufenican.

HRAC Gruppe K3 = Inhibitoren der Zellteilung - Flufenacet.

Dosis g AS/ha = Aufwandmenge in Gramm Aktivsubstanz pro Hektar.

| AS | = Aktivsubstanz (bezogen auf 100% Wirkstoff) | = a.i. (englisch) |
|---|---|---|
| VIOAR | = Viola arvensis | = Unkraut |
| STEME | = Stellaria media | = Unkraut |
| MATCH | = Matricaria chamomilla | = Unkraut |
| AVEFA | = Avena fatua | = Ungras |
| POAAN | = Poa annua | = Ungras |
| APESV | = Apera Spica-venti | = Ungras |
| ALOMY | = Alopecurus myosuroides | = Ungras |
| LOLPE | = Lolium perenne | = Ungras |
| LOLSS | = Lolium species | = Ungras |
| TRZAW | = Triticum aestivum, Winterweizen | = Kulturpflanze |
| TRZAS | = Triticum aestivum, Sommerweizen | = Kulturpflanze |
| HORVW | = Hordeum vulgare, Wintergerste | = Kulturpflanze |
| HORVS | = Hordeum vulgare, Sommergerste | = Kulturpflanze |

Die Wirkungen der erfindungsgemäßen herbiziden Mittel entsprechen den gestellten Anforderungen und lösen damit die Aufgabe der Verbesserung des Anwendungsprofils des herbiziden Wirkstoffs Flufenacet (u.a. Bereitstellung flexiblerer Lösungen in Bezug auf notwendige Aufwandmengen bei gleichbleibender bis gesteigerter Wirksamkeit).

Soweit herbizide Effekte der erfindungsgemäßen Mittel im Vergleich mit Mischungen des Standes der Technik beziehungsweise mit einzeln angewendeten Komponenten gegen wirtschaftlich bedeutende mono- und dikotyle Schadpflanzen im Focus standen, wurden die synergistischen herbiziden Wirkungen anhand der 'Colby-Formel' (vgl. S.R. Colby; Weeds 15 (1967), 20-22) berechnet:

$$E = (A + B + C) - (A{\times}B + A{\times}C + B{\times}C)/100 + (A{\times}B{\times}C)/10000$$

worin bedeutet:

A, B, C = jeweils Wirkung der Komponenten A bzw. B bzw. C in Prozent bei einer Dosierung von a bzw. b Gramm AS/ha;

$$E^C = \text{Erwartungswert nach Colby in \% bei einer Dosierung von a + b Gramm}$$

AS/ha.

$$\Delta = \text{Differenz (\%) von gemessenem Wert - \% - zu Erwartungswert - \% -}$$

(gemessener Wert minus Erwartungswert)

$\Delta^D$ = Differenz (%) von gemessenem Wert einer Beobachtung A - % - zu von gemessenem Wert einer Beobachtung B - %. Die beobachteten Werte A und B können je nach Versuchsansatz variieren und werden im Ergebnisteil definiert (z.B. Verhältnis: A = PE Applikation auf Boden, zu B = Einmischung in den Boden; oder A = PE Applikation auf Boden, zu B = Vorsaatapplikation auf den Boden etc.).

Auswertung: - gemessene Werte: jeweils für (A), (B) und (A)+(B) in %
Bewertung: - gemessener Wert (%) grösser > als $E^C$: $\overset{\wedge}{=}$ Synergismus +$\Delta$)
- gemessener Wert (%) gleich = $E^C$ : $\overset{\wedge}{=}$ Additive Wirkung ($\pm 0\Delta$)
- gemessener Wert (%) kleiner < als $E^C$ : $\overset{\wedge}{=}$ Antagonismus (-$\Delta$)

Die herbiziden Wirkungen der erfindungsgemäßen Mittel lagen dabei über den Erwartungswerten berechnet gemäß der'Colby-Formel'.

Gewächshausversuche

Standardmäßig, soweit nicht anders erwähnt, erfolgte die Applikation von Flufenacet als SC 500 Formulierung, entsprechend 500 g Aktivsubstanz je Liter Formulierungsprodukt. Die Applikation von Diflufenican erfolgte als SC 500 Formulierung, entsprechend 500 g Aktivsubstanz je Liter Formulierungsprodukt. Die Applikation von Metribuzin erfolgte als WG 70 Formulierung, entsprechend 700 g Aktivsubstanz je Kilogramm Formulierungsprodukt.

Tabelle 1.: Vergleich der Wirkung der Mischungen bei Applikation PE auf den Boden und nach Einmischung in den Boden folgend der Versuchsmethoden 1, 3 und 4.

| PE Applikation | Dosis gAS/ha | POAAN | STEME | TRZAW |
|---|---|---|---|---|
| (A) Flufenacet | 75 | 65 | 0 | 20 |
| (B) Diflufenican | 60 | 70 | 50 | 10 |
| (C) Metribuzin | 70 | 0 | 75 | 30 |
| (A)+(B)+(C) | 75+60+70 | 95 E$^c$ = 90; $\Delta$+6 | 100 E$^c$ = 88; $\Delta$+12 | 40 E$^c$ = 50; $\Delta$-10 |
| | | | | |
| Einmischung | Dosierung gAS/ha | POAAN | STEME | TRZAW |
| (A) Flufenacet | 75 | 90 | 0 | 60 |
| (B) Diflufenican | 60 | 75 | 95 | 20 |
| (C) Metribuzin | 70 | 15 | 0 | 55 |
| (A)+(B)+(C) | 75+60+70 | 100 E$^c$ = 98; $\Delta$+2 | 100 E$^c$ = 95; $\Delta$+5 | 70 E$^c$ = 86; $\Delta$-16 |
| | | | | |
| $\Delta^D$ = A: PE - B: Einmischung | | $\Delta^D$ -5 | $\Delta^D$ ±0 | $\Delta^D$ -30 |

Sowohl bei der PE Applikation, als auch bei der Einmischung in den Boden, wird durch die Mischung der Wirkstoffe eine synergistische Wirkung erzielt im Vergleich mit der Wirkung der Einzelwirkstoffe ($\Delta$ +2 - +12). Die PE Wirkung (A) ist vergleichbar mit der Wirkung bei Einmischung (B) ($\Delta^D$ ±0 - -5). Durch die Vermeidung der Einmischung werden die Kosten der Einmischung eingespart, die Bodenstruktur geschont und $CO^2$ Emissionen eingespart. Die Kulturverträglichkeit ist generell in der PE Anwendung und der Einmischung verbessert ($\Delta$ -10 - -16; negative Werte für Kulturpflanzen bedeuten eine verbesserte Kulturpflanzenverträglichkeit). Im Vergleich der PE Anwendung gegenüber der Einmischung ist die Kulturpflanzenverträglichkeit deutlich verbessert ($\Delta^D$ -30; negative Werte für Kulturpflanzen bedeuten eine verbesserte Kulturpflanzenverträglichkeit).

Kommentar: Bei der PE Applikation wird durch die Mischung der Wirkstoffe eine vergleichende Wirkung erzielt wie mit der Einmischung in den Boden. Gleichzeitig ist die Kulturpflanzenverträglichkeit jedoch deutlich verbessert.

Tabelle 2.: Vergleich der Wirkung der Mischungen bei Applikation PO folgend der Versuchsmethoden 2 und 5.

| PO Applikation | Dosis gAS/ha | APESV | HORVS |
|---|---|---|---|
| (A) Flufenacet | 240 | 65 | 60 |
| (B) Diflufenican | 120 | 5 | 5 |
| (C) Metribuzin | 140 | 79 | 70 |
| (A)+(B)+(C) | 240+120+140 | 100 $E^c$ =93; $\Delta$ +7 | 70 $E^c$ = 89; $\Delta$ -19 |

Kommentar: Im Vergleich zu der Wirkung der Einzelwirkstoffe konnte in der Mischung aufgrund des hohen Wirkungsniveaus eine nur leicht synergistische Wirkung bei den untersuchten Pflanzenarten erreicht werden ($\Delta$ +7). Jedoch war nach der PO Applikation die Kulturverträglichkeit deutlich verbessert ($\Delta$ -19; negative Werte für Kulturpflanzen bedeuten eine verbesserte Kulturpflanzenverträglichkeit). In der Mischung wird die Anwendungsflexibilität der Wirkstoffe erweitert. Die Einzelwirkstoffe werden in erster Linie nur PE angewendet, sodass mit der Mischung eine Anwendung zu späteren Wachstumsstadien ermöglicht wird.

In der PO Applikation wird die Wirkungssicherheit und die Kulturpflanzenverträglichkeit verbessert.

Tabelle 3.: Vergleich der Wirkung der Mischungen bei Applikation im Vorsaatverfahren folgend der Versuchsmethode 6.

| PE Applikation | Dosis gAS/ha | LOLPE | AVEFA | TRZAW |
|---|---|---|---|---|
| (A) Flufenacet | 90 | 90 | 80 | 30 |
| (B) Diflufenican | 90 | 60 | 50 | 10 |
| (C) Metribuzin | 140 | 50 | 10 | 55 |
| (A)+(B)+(C) | 90+90+140 | 100 $E^c$ = 98; $\Delta$ +2 | 100 $E^c$ = 91; $\Delta$ +9 | 65 $E^c$ = 72; $\Delta$ -7 |
| | | | | |
| Applikation 7 Tage vor Aussaat | Dosierung gAS/ha | LOLPE | AVEFA | TRZAW |
| (A) Flufenacet | 90 | 80 | 70 | 60 |
| (B) Diflufenican | 90 | 0 | 10 | 10 |
| (C) Metribuzin | 140 | 10 | 0 | 0 |
| (A)+(B)+(C) | 90+90+140 | 100 $E^c$ = 82; $\Delta$ +18 | 100 $E^c$ = 73; $\Delta$ +27 | 50 $E^c$ = 64; $\Delta$ -14 |
| $\Delta^D$ = A: Applikation vor Aussaat - B: PE Applikation | | $\Delta^D$ ±0 | $\Delta^D$ ±0 | $\Delta^D$ -15 |

Im Vergleich zu der Wirkung der Einzelwirkstoffe konnte in der Mischung sowohl bei PE Applikation als auch bei der Vorsaatanwendung eine synergistische Wirkung bei den untersuchten Pflanzenarten erreicht werden ($\Delta$ +2 - +27). Gleichzeitig war nach der Vorsaat Applikation die Kulturverträglichkeit verbessert ($\Delta$ -14; negative Werte für Kulturpflanzen bedeuten eine verbesserte Kulturpflanzenverträglichkeit). Im Vergleich der PE Anwendung zur Vorsaatanwendung, konnte aufgrund des hohen Wirkungsniveaus keine weitere Verbesserung der Wirkung erzielt werden ($\Delta^D \pm 0$), während die Kulturverträglichkeit jedoch verbessert wurde ($\Delta^D$ -15, negative Werte für Kulturpflanzen bedeuten eine verbesserte Kulturpflanzenverträglichkeit). Kommentar: In der Vorsaat Applikation bleibt durch die Mischung die Wirkungssicherheit erhalten während sich die Kulturpflanzenverträglichkeit verbesserte.

Tabelle 4.: Vergleich der Wirkung der Mischung bei unterschiedlichen Bodenarten folgend der Versuchsmethode 7.

| | Dosierung gAS/ha | STEME IU-Boden | STEME IU/EC73-Boden | Differenz der Bodenarten |
|---|---|---|---|---|
| (A) Flufenacet | 90 | 0 | 0 | $\Delta^D \pm 0$ |
| (B) Diflufenican | 90 | 95 | 38 | $\Delta^D$ -57 |
| (C) Metribuzin | 140 | 75 | 5 | $\Delta^D$ -70 |
| (A)+(B)+(C) | 90+90+140 | 100<br>$E^c = 99$; $\Delta$ -1 | 99<br>$E^c = 41$; $\Delta$ +58 | $\Delta^D$ -1 |
| Differenz $\Delta^D$ der Wirkung der Einzelwirkstoffe ($\varnothing$) | | | | $\Delta^D$ -41 |
| Differenz $\Delta^D$ der Wirkung der Mischung zur Differenz $\Delta^D$ der durchschnittlichen Wirkung der Einzelwirkstoffe | | | | $\Delta^D$ +40 |

| | Dosierung gAS/ha | MATCH IU-Boden | MATCH IU/EC73-Boden | Differenz |
|---|---|---|---|---|
| (A) Flufenacet | 90 | 28 | 5 | $\Delta^D$ -23 |
| (B) Diflufenican | 90 | 40 | 35 | $\Delta^D$ -5 |
| (C) Metribuzin | 140 | 0 | 15 | $\Delta^D$ +15 |
| (A)+(B)+(C) | 90+90+140 | 100<br>$E^c = 57$; $\Delta$ +43 | 100<br>$E^c = 48$; $\Delta$ +52 | $\Delta^D \pm 0$ |
| Differenz $\Delta^D$ der Wirkung der Einzelwirkstoffe ($\varnothing$) | | | | $\Delta^D$ -4 |
| Differenz $\Delta^D$ der Wirkung der Mischung zur Differenz $\Delta^D$ der durchschnittlichen Wirkung der Einzelwirkstoffe | | | | $\Delta^D$ +4 |

| Boden - sL | Dosierung gAS/ha | HORVS IU-Boden | HORVS IU/EC73-Boden | Differenz |
|---|---|---|---|---|
| (A) Flufenacet | 90 | 10 | 0 | $\Delta^D$ -10 |
| (B) Diflufenican | 90 | 0 | 0 | $\Delta^D \pm 0$ |
| (C) Metribuzin | 140 | 0 | 0 | $\Delta^D \pm 0$ |
| (A)+(B)+(C) | 90+90+140 | 38<br>$E^c = 10$; $\Delta$ +28 | 20<br>$E^c = 0$; $\Delta$ +20 | $\Delta^D$ -18 |
| Differenz $\Delta^D$ der Wirkung der Einzelwirkstoffe ($\varnothing$) | | | | $\Delta^D$ -3 |
| Differenz $\Delta^D$ der Wirkung der Mischung zur Differenz $\Delta^D$ der durchschnittlichen Wirkung der Einzelwirkstoffe | | | | $\Delta^D$ -15 |

Die Anwendbarkeit der Einzelwirkstoffe wird durch die Bodeneigenschaften begrenzt d.h. die Einzelwirkstoffe lassen sich nicht oder nur begrenzt auf Böden mit höheren Tongehalten und höheren organischen Substanzgehalten anwenden. Wie erwartet nimmt die Wirkung fast aller Einzelwirkstoffe in Böden mit einem höheren Gehalt an Ton und organischer Substanz ab (Abnahme $\varnothing \Delta^D$ +15 - -70%) (u.a. durch Bindung an Ton/Humuskomplexe und höherer mikrobiologischen Aktivität, welche zum beschleunigten Abbau führt). Die Mischung stabilisiert die Wirkung in unterschiedlichen Böden im Vergleich zu den Einzelwirkstoffen. Während die Wirkung der Einzelwirkstoffe um durchschnittlich $\varnothing \Delta^D$ -23% (Abnahme $\varnothing \Delta^D$ -4 - - 41 %) im schweren Boden abnimmt, nimmt die Wirkung der Mischung nur um $\varnothing \Delta^D$ 1% (Abnahme $\varnothing \Delta^D \pm 0$

- -1 %) ab. Die Mischung hat einen Vorteil von $\varnothing$+22% (Abnahme $\varnothing$ $\Delta^D$ +4 - +40%). Gleichzeitig verbessert sich in der Mischung die Kulturpflanzenverträglichkeit um $\Delta^D$ -15% (negative Werte für Kulturpflanzen bedeuten eine verbesserte Kulturpflanzenverträglichkeit). Dadurch wird die Anwendungsflexibilität der Mischung auf unterschiedlichen Bodentypen verbessert. Kommentar: Die Mischung verbessert die Wirkung bei gleichzeitig besserer Kulturpflanzenverträglichkeit in unterschiedlichen Böden im Vergleich zu den Einzelwirkstoffen.

Tabelle 5.: Vergleich der Wirkung der Mischung auf resistente Biotypen nach PE Applikation folgend der Versuchsmethode 8.

| | Dosis gAS/ha | LOLSS sensitiv | LOLSS resistent | Differenz $\Delta^D$ Wirkung resistent zu Wirkung sensitiv |
|---|---|---|---|---|
| (A) Flufenacet | 90 | 85 | 10 | $\Delta^D$ -75 |
| (B) Diflufenican | 90 | 80 | 20 | $\Delta^D$ -60 |
| (C) Metribuzin | 140 | 70 | 70 | $\Delta^D$ +0 |
| (A)+(B)+(C) | 90+90+140 | 100 $E^c$ = 99; $\Delta$+1 | 100 $E^c$ = 78; $\Delta$+22 | $\Delta^D$ ±-0 |
| Differenz $\Delta^D$ der Wirkung der Einzelwirkstoffe ($\varnothing$) | | | | $\Delta^D$ -45 |
| Differenz $\Delta^D$ der Wirkung der Mischung zur Differenz $\Delta^D$ der durchschnittlichen Wirkung der Einzelwirkstoffe | | | | $\Delta^D$ +45 |
| (C)[1] Iodosulfuron | 10 | 98 | 50 | $\Delta^D$ -48 |

[1]Vergleichsprodukt zur Darstellung der vorhandenen Resistenz in den unterschiedlichen Biotypen. Iodosulfuron ist ein Wirkstoff aus der HRAC Gruppe B. Kommentar: Bei allen untersuchten Pflanzenarten konnte durch die Mischung, aufgrund des hohen Wirkungsgrades, nur teils eine hohe synergistische Wirkung nachgewiesen werden ($\Delta$ ±0 - +22). Die geringen Wirkungsgrade der Einzelwirkstoffe Flufenacet und Diflufenican weisen darauf hin, dass der resistente LOLSS Biotyp auch eine geringere Sensitivität gegenüber diesen Wirkstoffen aufweist. Erst die Mischung mit Metribuzin führt zu einer unerwartet hohen synergistischen Wirkung ($\Delta$+22). Der Vorteil der Mischung gegenüber den Einzelwirkstoffen beträgt $\Delta^D$+45%. Die Wirkungssicherheit gegen TSR und EMR resistente Biotypen wird durch die Dreiermischung deutlich verbessert. Wirkstoffe der HRAC Gruppe F1, K3 und C1 eignen sich in der Mischung hervorragend für ein effektives Resistenzmanagement.

Tabelle 6.: Vergleich der Wirkung der Mischung auf bei unterschiedlichen Aussaattiefen bei PE Applikation folgend der Versuchsmethode 9.

| Aussaattiefe | Dosis gAS/ha | MATCH 5mm | MATCH 20mm | HORVS 5mm | HORVS 20mm |
|---|---|---|---|---|---|
| (A) Flufenacet | 90 | 30 | 30 | 30 | 20 |
| (B) Diflufenican | 90 | 60 | 70 | 30 | 5 |
| (C) Metribuzin | 140 | 100 | 70 | 70 | 30 |
| (A)+(B)+(C) | 90+90+140 | 100 $E^c$ = 100; $\Delta$±0 | 100 $E^c$ = 94; $\Delta$+6 | 60 $E^c$ = 85; $\Delta$-25 | 30 $E^c$ = 47; $\Delta$-17 |
| Aussaatdifferenz $\Delta^D$ = A: Aussaattiefe 20mm - B: Aussaattiefe 5mm | | $\Delta^D$ ±0 | | $\Delta^D$ -30 | |

Bei allen untersuchten Pflanzenarten konnte durch die Mischung aufgrund des hohen Wirkungsgrades nur eine geringe synergistische Wirkung nachgewiesen werden ($\Delta$±0 - +6). Die Kulturverträglichkeit generell verbesserte sich in der Mischung deutlich im Vergleich zu den Einzelwirkstoffen ($\Delta$ -17 - -25; negative Werte für Kulturpflanzen bedeuten eine verbesserte Kulturpflanzenverträglichkeit). Kommentar: In der PE Applikation wird durch die Mischung der drei Wirkstoffe die Wirkungssicherheit gegen Pflanzen die aus unterschiedlichen Tiefen auflaufen verbessert während die Kulturpflanzenverträglichkeit nicht negativ beeinflusst wird, sondern sich verbessert.

Tabelle 7.: Vergleich der Wirkung der Mischung bei unterschiedlichen pH-Wert des Bodens bei PE Applikation folgend der Versuchsmethode 11.

| PE Applikation | Dosis gAS/ha | HORVS pH 7.4 | HORVS pH 8.4 | AVEFA pH 7.4 | AVEFA pH 8.4 |
|---|---|---|---|---|---|
| (A) Flufenacet | 90 | 10 | 10 | 80 | 55 |
| (B) Diflufenican | 90 | 0 | 0 | 0 | 30 |
| (C) Metribuzin | 140 | 40 | 50 | 90 | 90 |
| (A)+(B)+(C) | 90+90+140 | 50 $E^c = 46$; $\Delta$ +4 | 40 $E^c = 55$; $\Delta$ -15 | 100 $E^c = 98$; $\Delta$ +2 | 100 $E^c = 97$; $\Delta$ +3 |
| pH-Wert Differenz $\Delta^D$ = A: pH-Wert 7.4 - B: pH-Wert 8.4 | | $\Delta^D$ +10 | | $\Delta^D$ ±0 | |

Bei allen untersuchten Pflanzenarten konnte durch die Mischung aufgrund des hohen Wirkungsgrades nur eine geringe synergistische Wirkung nachgewiesen werden ($\Delta$+2 - +3). Die Kulturverträglichkeit generell verbesserte sich in der Mischung im Vergleich zu den Einzelwirkstoffen ($\Delta$ +4 - -15; negative Werte für Kulturpflanzen bedeuten eine verbesserte Selektivität). Durch den höheren pH-Wert des Bodens wurde generell die Kulturverträglichkeit in der Mischung verbessert um $\Delta^D$ +10, während die Wirkung konstant hoch blieb $\Delta^D$ ±0.

Kommentar: In der PE Applikation wird bei einem höheren pH des Bodens die Selektivität verbessert im Vergleich zu den Einzelwirkstoffen.

## Patentansprüche

1. Herbizide Mittel, enthaltend als einzige herbizid wirksame Bestandteile

    A) Flufenacet (Komponente A),
    B) Diflufenican (Komponente B) und
    C) Metribuzin (Komponente C);

    worin die Herbizid-Komponenten im nachstehend angegebenen Gewichtsverhältnis zueinander stehen:

    (Bereich Komponente A) : (Bereich Komponente B) : (Bereich Komponente C)
    (2 - 400) : (1 - 500) : (5 - 5000).

2. Herbizide Mittel nach Anspruch 1, worin die Herbizid-Komponenten im nachstehend angegebenen Gewichtsverhältnis zueinander stehen:

    (Bereich Komponente A) : (Bereich Komponente B) : (Bereich Komponente C)
    (1 - 40) : (1 - 30) : (2 - 50).

3. Herbizide Mittel nach Anspruch 1, worin die Herbizid-Komponenten im nachstehend angegebenen Gewichtsverhältnis zueinander stehen:

    (Bereich Komponente A) : (Bereich Komponente B) : (Bereich Komponente C)
    (1 10) : (1 - 10) : (1 - 10).

4. Herbizide Mittel nach einem der Ansprüche 1 bis 3, enthaltend für die jeweiligen Herbizid-Komponenten nachstehend angegebenen Aufwandmengen:

    Komponente A: 10 - 2000 g AS/ha Flufenacet;
    Komponente B: 1 - 500 g AS/ha Diflufenican;
    Komponente C: 5 - 5000 g AS/ha Metribuzin.

**5.** Herbizide Mittel nach einem der Ansprüche 1 bis 3, enthaltend für die jeweiligen Herbizid-Komponenten nachstehend angegebenen Aufwandmengen:

Komponente A: 30 - 400 g AS/ha Flufenacet;
Komponente B: 10 - 300 g AS/ha Pendimethalin;
Komponente C: 20 - 500 g AS/ha Diflufenican.

**6.** Herbizide Mittel nach einem der Ansprüche 1 bis 3, enthaltend für die jeweiligen Herbizid-Komponenten nachstehend angegebenen Aufwandmengen:

Komponente A: 50 - 300 g AS/ha Flufenacet;
Komponente B: 20 - 200 g AS/ha Pendimethalin;
Komponente C: 30 - 300 g AS/ha Diflufenican.

**7.** Herbizide Mittel nach einem der Ansprüche 1 bis 6, zusätzlich enthaltend im Pflanzenschutz übliche Zusatzstoffe und/oder Formulierungshilfsmittel.

**8.** Herbizide Mittel nach einem der Ansprüche 1 bis 7, zusätzlich enthaltend eine oder mehrere weitere Komponenten aus der Gruppe agrochemischer Wirkstoffe umfassend Insektizide, Fungizide und Safener.

**9.** Verfahren zur Bekämpfung von unerwünschtem Pflanzenwuchs, worin die Komponenten A, B und C der herbiziden Mittel, definiert gemäß einem der Ansprüche 1 bis 8, gemeinsam oder getrennt auf die Pflanzen, Pflanzenteile, Pflanzensamen oder die Fläche, auf der die Pflanzen wachsen, appliziert werden.

**10.** Verfahren nach Anspruch 9 zur selektiven Bekämpfung von Schadpflanzen in Pflanzenkulturen.

**11.** Verfahren nach Anspruch 10, worin die Pflanzenkulturen gentechnisch verändert oder durch Mutationsselektion erhalten wurden.

**12.** Verwendung der nach einem der Ansprüche 1 bis 8 definierten herbiziden Mittel zur Bekämpfung von Schadpflanzen.

**Claims**

**1.** A herbicidal composition comprising, as only herbicidally active components,

A) flufenacet (component A),
B) diflufenican (component B) and
C) metribuzin (component C);

in which the herbicide components are present in the weight ratio stated below:

(range component A) : (range component B) : (range component C)
(2 - 400) : (1 - 500) : (5 - 5000).

**2.** The herbicidal composition as claimed in claim 1, in which the herbicide components are present in the weight ratio stated below:

(range component A) : (range component B) : (range component C)
(1 - 40) : (1 - 30) : (2 - 50).

**3.** The herbicidal composition as claimed in claim 1, in which the herbicide components are present in the weight ratio stated below:

(range component A) : (range component B) : (range component C)
(1 - 10) : (1 - 10) : (1 - 10).

**4.** The herbicidal composition as claimed in any of claims 1 to 3 comprising the application rates stated below for the respective herbicide components:

> component A: 10 - 2000 g of AS/ha flufenacet;
> component B: 1 - 500 g of AS/ha diflufenican;
> component C: 5 - 5000 g of AS/ha metribuzin.

5. The herbicidal composition as claimed in any of claims 1 to 3 comprising the application rates stated below for the respective herbicide components:

> component A: 30 - 400 g of AS/ha flufenacet;
> component B: 10 - 300 g of AS/ha pendimethalin;
> component C: 20 - 500 g of AS/ha diflufenican.

6. The herbicidal composition as claimed in any of claims 1 to 3 comprising the application rates stated below for the respective herbicide components:

> component A: 50 - 300 g of AS/ha flufenacet;
> component B: 20 - 200 g of AS/ha pendimethalin;
> component C: 30 - 300 g of AS/ha diflufenican.

7. The herbicidal composition as claimed in any of claims 1 to 6, additionally comprising formulation auxiliaries and/or additives customary in crop protection.

8. The herbicidal composition as claimed in any of claims 1 to 7, additionally comprising one or more further components from the group of the agrochemically active compounds comprising insecticides, fungicides and safeners.

9. A method for controlling unwanted vegetation wherein the components A, B and C of the herbicidal compositions, defined according to any of claims 1 to 8, are applied jointly or separately to the plants, plant parts, plant seeds or to the area on which the plants grow.

10. The method as claimed in claim 9 for the selective control of harmful plants in crop plants.

11. The method as claimed in claim 10 wherein the crop plants are genetically modified or have been obtained by mutation selection.

12. The use of the herbicidal compositions defined according to any of claims 1 to 8 for the control of harmful plants.


**Revendications**

1. Compositions herbicides, contenant comme seuls composants à activité herbicide

> A) du flufénacet (composant A),
> B) du diflufénicanil (composant B) et
> C) de la métribuzine (composant C) ;

dans lesquelles les composants herbicides se trouvent entre eux en le rapport pondéral indiqué ci-après :

> (plage de composant A) : (plage de composant B) : (plage de composant C)
> (2 - 400) : (1 - 500) : (5 - 5 000).

2. Compositions herbicides selon la revendication 1, dans lesquelles les composants herbicides se trouvent entre eux en le rapport pondéral indiqué ci-après :

> (plage de composant A) : (plage de composant B) : (plage de composant C)
> (1 - 40) : (1 - 30) : (2 - 50).

3. Compositions herbicides selon la revendication 1, dans lesquelles les composants herbicides se trouvent entre eux en le rapport pondéral indiqué ci-après :

(plage de composant A) : (plage de composant B) : (plage de composant C)
(1 - 10) : (1 - 10) : (1 - 10).

4. Compositions herbicides selon l'une quelconque des revendications 1 à 3, contenant les quantités appliquées des composants herbicides respectifs indiquées ci-après :

composant A : 10 - 2 000 g sa/ha de flufénacet ;
composant B : 1 - 500 g sa/ha de diflufénicanil ;
composant C : 5 - 5 000 g sa/ha de métribuzine.

5. Compositions herbicides selon l'une quelconque des revendications 1 à 3, contenant les quantités appliquées des composants herbicides respectifs indiquées ci-après :

composant A : 30 - 400 g sa/ha de flufénacet ;
composant B : 10 - 300 g sa/ha de pendiméthaline ;
composant C : 20 - 500 g sa/ha de diflufénicanil.

6. Compositions herbicides selon l'une quelconque des revendications 1 à 3, contenant les quantités appliquées des composants herbicides respectifs indiquées ci-après :

composant A : 50 - 300 g sa/ha de flufénacet ;
composant B : 20 - 200 g sa/ha de pendiméthaline ;
composant C : 30 - 300 g sa/ha de diflufénicanil.

7. Compositions herbicides selon l'une quelconque des revendications 1 à 6, contenant en outre des additifs et/ou adjuvants de formulation usuels dans le domaine phytosanitaire.

8. Compositions herbicides selon l'une quelconque des revendications 1 à 7, contenant en outre un ou plusieurs autres composants choisis dans le groupe des substances actives agrochimiques comprenant des insecticides, fongicides et phytoprotecteurs.

9. Procédé pour la lutte contre une végétation indésirable, dans lequel on applique les composants A, B et C des compositions herbicides, définies selon l'une quelconque des revendications 1 à 8, ensemble ou séparément, sur les plantes, parties de plantes, semences de plantes ou l'aire sur laquelle poussent les plantes.

10. Procédé selon la revendication 9, pour la lutte sélective contre des plantes nuisibles dans des cultures de plantes.

11. Procédé selon la revendication 10, dans lequel les cultures de plantes sont génétiquement modifiées ou obtenues par sélection de mutations.

12. Utilisation des compositions herbicides définies selon l'une quelconque des revendications 1 à 8 pour la lutte contre des plantes nuisibles.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5985797 B
- US 5593942 B
- US 5912206 B
- US 5811373 B
- US 5858920 B
- US 6967188 B
- US 6492301 B
- US 6864217 B
- US 6486096 B
- US 20030069138 A
- WO 2002058472 A
- US 6365550 B
- US 20030060367 A
- US 6878675 B
- US 6071858 B
- WO 2007112834 A
- DE 4223465 A1
- WO 2008075065 A2
- WO 2007112834 A2
- US 2004171488 A1
- EP 0221044 A

- EP 0131624 A
- WO 92011376 A
- WO 92014827 A
- WO 91019806 A
- EP 0242236 A
- EP 0242246 A
- WO 92000377 A
- EP 0257993 A
- US 5013659 A
- EP 0142924 A
- EP 0193259 A
- WO 91013972 A
- EP 0309862 A
- EP 0464461 A
- EP 0305398 A
- EP 0476555 A
- EP 0048436 A
- EP 0336151 A
- US 4400196 A
- EP 0502014 A

**In der Beschreibung aufgeführte Nicht-Patentliteratur**

- **GREY, T L ; BRIDGES, D C.** Alternatives to Diclofop for the Control of Ryegrass in Winter Wheat. *WEED TECHNOLOGY,* 05. Marz 2001, vol. 17 (2), 219-223
- **RITTER, R L ; HIWOT MENBERE.** Preemergence Control of Italian Ryegrass in Wheat. *WEED TECHNOLOGY,* 12. Marz 2001, vol. 16 (1), 55-59
- **YENISH, J P ; EATON, N A.** Weed Control in Dry Pea Under Conventional No-Tillage Systems. *WEED TECHNOLOGY,* 28. Dezember 2000, vol. 16 (1), 88-95
- **W JAMES GRICHAR et al.** Flufenacet and Metribuzin Combinations for Weed Control and Corn (Zea mays) Tolerance. *WEED TECHNOLOGY,* 10. Juli 2002, vol. 17 (2), 346-351
- The Pesticide Manual. 2006
- The e-Pesticide Manual. British Crop Protection Council and the Royal Soc. of Chemistry, 2006
- *The Compendium of Pesticide Common Names, http://www.alanwood.net/pesticides*
- Gene Transfer to Plants. Springer Lab Manual. Springer Verlag, 1995
- **CHRISTOU.** *Trends in Plant Science,* 1996, vol. 1, 423-431

- Molecular Cloning. **SAMBROOK et al.** A Laboratory Manual. Cold Spring Harbor Laboratory Press, 1989
- **WINNACKE.** Gene und Klone. VCH Weinheim, 1996
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- Manual on Development and Use of FAO and WHO Specifications for Pesticides. FAO and WHO, 2002
- **WINNACKER-KÜCHLER.** Chemische Technologie. C. Hanser Verlag, 1986, vol. 7
- **VAN VALKENBURG.** Pesticide Formulations. Marcel Dekker, 1973
- **K. MARTENS.** Spray Drying Handbook. G. Goodwin Ltd, 1979
- **WATKINS.** Handbook of Insecticide Dust Diluents and Carriers. Darland Books
- **H.V. OLPHEN.** Introduction to Clay Colloid Chemistry. J. Wiley & Sons

- **MARSDEN.** Solvents Guide. Interscience, 1950
- **MCCUTCHEON'S.** Detergents and Emulsifiers Annual. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxidaddukte. Wiss. Verlagsgesellschaft, 1976
- Spray-Drying Handbook. G. Goodwin Ltd, 1979
- **J.E. BROWNING.** Chemical and Engineering. *Agglomeration,* 1967, 147 ff
- Perry's Chemical Engineer's Handbook. Mc-Graw-Hill, 1973, 8-57
- **G.C. KLINGMAN.** Weed Control as a Science. John Wiley and Sons, Inc, 1961, 81-96
- **J.D. FREYER ; S.A. EVANS.** Weed Control Handbook. Scientific Publications, 1968, 101-103
- Factors Affecting Herbicidal Activity and Selectivity. *Proc. EWRS Symp.,* 1988, 227-232
- Römpp Chemie Lexikon. Thieme Verlag, vol. 2, 1343
- **S.R. COLBY.** *Weeds,* 1967, vol. 15, 20-22